# EUROPÄISCHE PATENTANMELDUNG

(11) **EP 3 424 660 A1**
(43) Veröffentlichungstag der Anmeldung: **09.01.2019**
(21) Anmeldenummer: 18170144.2
(22) Anmeldetag: 30.04.2018
(51) Int. Cl.: B28B 11/00, C04B 40/06, E04G 21/20

(54) **VERFAHREN ZUR HERSTELLUNG EINER GEBÄUDEMAUER AUS WANDBAUSTEINEN UND MÖRTEL SOWIE WANDBAUELEMENT ZUR VERWENDUNG IN EINEM DERARTIGEN VERFAHREN**

(30) Priorität: 03.07.2017 DE 102017114809
(71) Anmelder: quick-mix Gruppe GmbH & Co. KG, 49090 Osnabrück (DE)
(72) Erfinder: KANIG, Martin, 49565 Bramsche (DE)
(74) Vertreter: Deters, Frank

(57) **Zusammenfassung**

Die Erfindung betrifft ein Verfahren zur Herstellung einer Gebäudemauer aus Wandbausteinen und Mörtel. Mehrere im Wesentlichen quaderförmige, werkseitig hergestellte Wandbauelemente, jeweils umfassend einen Wandbaustein mit einer Oberseite, auf der ein Trockenmörtel enthaltend zumindest ein Bindemittel und wenigstens eine Gesteinskörnung sowie optional Zusatzstoffe und optional Zusatzmittel ohne Reaktion von wenigstens 90 % des enthaltenen Bindemittels fixiert ist, auf einer Baustelle in einer ersten Reihe auf Stoß nebeneinander und den Trockenmörtel relativ zur zu erstellenden Gebäudemauer nach oben ausgerichtet positioniert werden. Der Trockenmörtel der ersten Reihe wird mit Wasser durchsetzt. Auf die erste Reihe werden eine zweite Reihe der Wandbauelemente ebenfalls auf Stoß nebeneinander den Trockenmörtel relativ zur zu erstellenden Gebäudemauer nach oben ausgerichtet positioniert. Der Trockenmörtel der zweiten Reihe Wandbauelemente wird mit Wasser durchsetzt. Danach mit ein oder mehreren weiteren Reihen der Wandbauelemente in analoger Weise zur Erstellung der Gebäudemauer fortgefahren.

## Beschreibung

Die Erfindung betrifft ein Verfahren zur Herstellung einer Gebäudemauer aus Wandbausteinen und Mörtel. Zudem betrifft die Erfindung Wandbauelemente zur Verwendung in einem derartigen Verfahren.

Gebäudemauern werden herkömmlich dergestalt hergestellt, dass auf einen Wandbaustein ein Nassmörtel aufgetragen wird, auf den dann wiederum die nächste Lage Wandbausteine aufgebracht wird. Der Mörtel wird dabei baustellenseitig in einem Mischgefäß mit Hilfe eines Rührquirls oder aber einfacher mit einer Mischmaschine angemischt. Das Auftragen des Mörtels erfolgt herkömmlich mit einer Kelle oder aber schneller und einfacher mit Hilfe eines Auftragschlittens.

Um die Erstellung der Gebäudemauern zu beschleunigen, sind aus der AT 514497 B1 und der DE 10 2013 007 800 B4 Mörtelbänder bekannt. Hierbei ist ein Trockenmörtel auf einem biegsamen und bandförmigen Träger mit maschenförmiger oder offenporiger Oberfläche aufgetragen. Auf der Baustelle wird das Mörtelband auf eine Reihe der Wandbausteine gelegt und entsprechend der Länge der Mauer zurechtgeschnitten. Das Mörtelband wird anschließend mit Wasser benetzt, wodurch die Härtungsreaktion startet. Nachteilig an derartigen Mörtelbändern ist aber, dass das Zuschneiden der Mörtelbänder insbesondere in Rand- und Ecksituationen aufwendig ist. Zudem fällt bei derartigen Mörtelbändern Müll in Form von Verpackungen sowie in Form von Resten der Mörtelbänder an, die entsorgt werden müssen. Auch müssen die Mörtelbänder auf der Baustelle sehr exakt relativ zur darunter befindlichen Steinlage ausgerichtet werden. Ein derart exaktes Arbeiten ist auf der Baustelle nicht immer sichergestellt.

Der Erfindung liegt die Aufgabe zugrunde, ein Verfahren zur Herstellung einer Gebäudemauer aus Wandbausteinen und Mörtel bereitzustellen, das die vorgenannten Nachteile vermeidet. Der Erfindung liegt zudem die Aufgabe zugrunde, ein Wandbauelement zur Durchführung des vorgenannten Verfahrens bereitzustellen.

Die Erfindung wird durch ein Verfahren der eingangs genannten Art mit den Merkmalen des kennzeichnenden Teils des Anspruchs 1 und durch einen Wandbauelement der eingangs genannten Art mit den Merkmalen des kennzeichnenden Teils des Anspruchs 7 gelöst. Weitere Einzelheiten und Vorteile der Erfindung sind den Unteransprüchen entnehmbar.

Erfindungsgemäß werden im Wesentlichen quaderförmige Wandbauelemente verarbeitet, die werkseitig hergestellt wurden, also außerhalb der Baustelle in einem Werk, z.B. einem Werk, in dem bereits die Wandbausteine hergestellt werden. Die Wandbauelemente umfassen dabei jeweils einen Wandbaustein mit einer Oberseite, auf der ein Trockenmörtel enthaltend zumindest ein Bindemittel und wenigstens eine Gesteinskörnung sowie optional Zusatzstoffe und optional Zusatzmittel fixiert ist, und zwar ohne Reaktion von mindesten 90% des im Trockenmörtel enthaltenen Bindemittels. Auch nach dem Fixieren des Trockenmörtels auf der Oberseite des Wandbausteins ist der Trockenmörtel somit ein Trockenmörtel im Sinne der DIN EN 998-2:2010-12, also ein Mörtel, der in einem Werk zusammengesetzt und gemischt wird und lediglich die Zugabe von Wasser erfordert. Besonders bevorzugt ist der Trockenmörtel ohne Reaktion des gesamten enthaltenen Bindemittels auf der Oberseite des Wandbausteins fixiert.

Die Wandbauelemente werden nach dem erfindungsgemäßen Verfahren auf einer Baustelle in einer ersten Reihe auf Stoß nebeneinander und den Trockenmörtel relativ zur zu erstellenden Wand nach oben ausgerichtet positioniert. Wird die Wand also beispielsweise senkrecht zu einer Aufstandsfläche errichtet, so wird das Wandbauelement dergestalt ausgerichtet, dass der Trockenmörtel der Aufstandsfläche abgewandt positioniert ist. Anschließend wird der Trockenmörtel der ersten Reihe mit Wasser durchsetzt. Hierzu kann der Trockenmörtel beispielsweise mit einer Gießkanne oder einem Schlauch ggf. mit entsprechendem Düsenaufsatz benetzt werden. Auf die erste Reihe der Wandbauelemente wird anschließend eine zweite Reihe der Wandbauelemente ebenfalls auf Stoß nebeneinander den Trockenmörtel relativ zur zu erstellenden Gebäudemauer nach oben ausgerichtet positioniert. Anschließend wird der Trockenmörtel der zweiten Reihe Wandbauelemente mit Wasser durchsetzt und mit ein oder mehreren weiteren Reihen der Wandbauelemente in analoger Weise zur Erstellung der Gebäudemauer fortgefahren. Die oberste Reihe der zu erstellenden Gebäudemauer wird bevorzugt mit einem herkömmlichen Wandbaustein ohne Mörtel auf dessen Oberseite erstellt, so dass die oberste Reihe der Gebäudemauer auf deren Oberseite mörtelfrei ist. Durch das erfindungsgemäße Verfahren mit werksseitig, außerhalb der Baustelle hergestellten Wandbauelementen, die auf der Baustelle nur noch positioniert und mit Wasser benetzt werden müssen, ist die Verarbeitung auf der Baustelle sehr einfach und wenig fehleranfällig. Der Trockenmörtel ist immer in gleichbleibender und idealer Menge zwischen den Wandbausteinen vorhanden und es fällt außer dem Verpackungsmaterial der Wandbausteine, die besonders bevorzugt auf einer Palette angeliefert werden, kein weiterer Müll an. Insbesondere müssen kein bereits angerührter Trockenmörtel und auch keine zerschnittenen Mörtelbänder sowie deren Verpackungen entsorgt werden.

In einer besonders bevorzugten Ausgestaltung der Erfindung ist die Fixierung des Trockenmörtels an der Oberseite des Wandbauelements derart gestaltet bzw. dergestalt ausgebildet, dass der Trockenmörtel an dem Wandbaustein auch entgegen der Schwerkraft anhaftet. Wird das Wandbauelement daher auf der Baustelle aus einer relativ zur Erde waagerechten Position mit der Oberseite, auf der der Trockenmörtel fixiert ist, der Erde abgewandt in eine hierzu geneigte oder gänzlich auf den Kopf gestellte Position verdreht, haftet der Trockenmörtel dennoch weiterhin an der Oberseite des Wandbausteins. Eine Verarbeitung auf der Baustelle ist hierdurch erheblich erleichtert.

Mit Vorteil wird der Trockenmörtel werkseitig durch einen Pressvorgang an der Oberseite des Wandbausteins fixiert. Der Trockenmörtel haftet bei dem erfindungsgemäßen Wandbauelement somit durch Kohäsion und Adhäsion, die durch ein Verpressen des Trockenmörtels mit dem Wandbaustein erzeugt wird, an der Oberseite des Wandbausteins.

Alternativ oder ergänzend hierzu enthält der Trockenmörtel wenigstens eine wasserlösliche Fixierverbindung zur Fixierung des Trockenmörtels in sich und an der Oberseite des Wandbauelements. In dem erfindungsgemäßen Verfahren wird die Fixierverbindung entsprechend werkseitig dem Trockenmörtel beigemengt. Mit Vorteil wird die Fixierverbindung dabei erfindungsgemäß von Polyvinylpyrrolidon, Alkohol, Methylcelluloseether und/oder Stärkeether gebildet. Diese Verbindungen haben sich als besonders geeignet erwiesen. Durch die Fixierverbindung haftet der Trockenmörtel besonders gut zum einen mit sich selbst und zudem an der Oberseite des Wandbaustoffs.

In einer bevorzugten Ausgestaltung der Erfindung wird die Oberseite des Wandbausteins vor dem Aufbringen des Trockenmörtels mit Wasser und/oder Alkohol angefeuchtet. Alternativ oder ergänzend hierzu wird die Oberseite des Wandbausteins vor dem Aufbringen des Trockenmörtels besonders bevorzugt aufgeraut. Durch beide Techniken wird jeweils unabhängig voneinander erreicht, dass der Trockenmörtel besser an der Oberseite des Wandbausteins anhaftet.

In einer vorteilhaften Ausgestaltung des Wandbauelements weist die Oberseite des Wandbausteins eine haftvermittelnde Grundierung auf. Besonders bevorzugt ist zwischen der Grundierung und dem Trockenmörtel jeweils in diese eindringend Quarzsand in einem Anteil positioniert, der höher ist als in dem übrigen Trockenmörtel. Im Herstellungsprozess des Wandbauelements wird die Grundierung nach deren Auftrag auf die Oberseite des Wandbausteins mit dem Quarzsand abgestreut, bevor Trockenmörtel aufgegeben wird. Durch beide Ausgestaltungen wird jeweils erreicht, dass der Haftverbund zwischen dem Trockenmörtel und der Oberseite des Wandbausteins erhöht ist. Durch den auf die Grundierung aufgestreuten Quarzsand wird zudem die Oberfläche erhöht, was den Haftverbund noch einmal verbessert.

In einer besonders bevorzugten Ausgestaltung der Erfindung beträgt die Korngröße der Gesteinskörnung 0,1 bis 2 mm. Die Trockenmörtelschicht wird dabei bevorzugt als Dünnbettmörtel ausgelegt. Das Gewicht des auf der Oberseite des Wandbausteins fixierten Trockenmörtels ist dadurch bereits durch die Menge des aufgebrachten Trockenmörtels stark reduziert. Hierdurch ist die Fixierung des Trockenmörtels an der Oberseite des Wandbausteins erhöht.

Mit Vorteil weist der Trockenmörtel auf der Oberseite des Wandbausteins eine Waben-, Linien- und/oder Noppenstruktur auf. Durch Aufsetzen der nächsten Reihe Wandbauelemente auf eine darunter befindliche Reihe Wandbauelemente verflachen diese Strukturen und ergeben dadurch eine normgemäße gleichmäßige Fugenstärke. Dies ist insbesondere bei Plansteinmauerwerk von Vorteil.

Als Wandbausteine werden bevorzugt Vollsteine, Hohlblocksteine, Hochlochstein mit und ohne wärmedämmende Füllung (Perlite, Mineralwolle, Kunststoffschaum), Porenbetonsteine, Steine aus Kalksandstein, Betonsteine aus Leicht- und Normalbeton und Ziegel verwendet.

Nachfolgend wird ein Ausführungsbeispiel der Erfindung näher beschrieben:
Auf eine Oberseite eines Wandbausteins in Form eines Kalksandsteins wird ein Trockenmörtel enthaltend Zement sowie eine natürliche Gesteinskörnung mit einem Korndurchmesser < 1 mm gegeben und mit dem Wandbaustein verpresst. Der Trockenmörtel haftet anschließend auf einer Oberseite des Wandbausteins. Mehrere derartige Wandbauelemente werden anschließend in Reihe auf Stoß nebeneinander und den Trockenmörtel relativ zur zu erstellenden Gebäudemauer nach oben ausgerichtet positioniert. Da die Gebäudemauer senkrecht zu einer Aufstandsfläche ausgerichtet werden soll, werden die Wandbauelemente dergestalt positioniert, dass der Trockenmörtel der Aufstandsfläche abgewandt ist. Anschließend wird der Trockenmörtel der ersten Reihe Wandbauelemente mit Wasser durchsetzt, das mit Hilfe einer Gießkanne aufgegeben wird. Der Trockenmörtel wird hierbei nicht vom Wandbaustein heruntergespült, sondern bleibt weiter auf dem Wandbaustein positioniert.
Auf die erste Reihe Wandbauelemente wird nun eine zweite Reihe der Wandbauelemente ebenfalls auf Stoß nebeneinander und den Trockenmörtel relativ zur zu erstellenden Gebäudemauer nach oben ausgerichtet positioniert. Auch der Trockenmörtel der zweiten Reihe Wandbauelemente wird mit Wasser durchsetzt. In gleicher Weise wird eine dritte, vierte usw. Reihe Wandbauelemente gesetzt und mit Wasser benetzt. Nach Abbinden des Trockenmörtels entsteht so in sehr einfacher Art und Weise eine Gebäudemauer aus den Kalksteinen.

## Patentansprüche

1. Verfahren zur Herstellung einer Gebäudemauer aus Wandbausteinen und Mörtel **dadurch gekennzeichnet, dass** mehrere im Wesentlichen quaderförmige, werkseitig hergestellte Wandbauelemente, jeweils umfassend einen Wandbaustein mit einer Oberseite, auf der ein Trockenmörtel enthaltend zumindest ein Bindemittel und wenigstens eine Gesteinskörnung sowie optional Zusatzstoffe und optional Zusatzmittel ohne Reaktion von wenigstens 90 % des enthaltenen Bindemittels fixiert ist, auf einer Baustelle in einer ersten Reihe auf Stoß nebeneinander und den Trockenmörtel relativ zur zu erstellenden Gebäudemauer nach oben ausgerichtet positioniert werden, der Trockenmörtel der ersten Reihe mit Wasser durchsetzt wird, auf die erste Reihe eine zweite Reihe der Wandbauelemente ebenfalls auf Stoß nebeneinander den Trockenmörtel relativ zur zu erstellenden Gebäudemauer nach oben ausgerichtet positioniert werden, der Trockenmörtel der zweiten Reihe Wandbauelemente mit Wasser durchsetzt wird, mit ein oder mehreren weiteren Reihen der Wandbauelemente in analoger Weise zur Erstellung der Gebäudemauer fortgefahren wird.

2. Verfahren nach Anspruch 1, **dadurch gekennzeichnet, dass** die Fixierung des Trockenmörtels an der Oberseite des Wandbausteins derart gestaltet ist, dass der Trockenmörtel an dem Wandbaustein auch entgegen der Schwerkraft anhaftet.

3. Verfahren nach einem der vorhergehenden Ansprüche, **dadurch gekennzeichnet, dass** der Trockenmörtel werkseitig durch einen Pressvorgang an der Oberseite des Wandbausteins fixiert wird.

4. Verfahren nach einem der vorhergehenden Ansprüche, **dadurch gekennzeichnet, dass** dem Trockenmörtel wenigstens eine wasserlösliche Fixierverbindung zur Fixierung des Trockenmörtels in sich und an der Oberseite des Wandbausteins beigemengt wird.

5. Verfahren nach einem der vorhergehenden Ansprüche, **dadurch gekennzeichnet, dass** die Oberseite des Wandbausteins vor dem Aufbringen des Trockenmörtels mit Wasser und/oder Alkohol angefeuchtet wird.

6. Verfahren nach einem der vorhergehenden Ansprüche, **dadurch gekennzeichnet, dass** die Oberseite des Wandbausteins vor dem Aufbringen des Trockenmörtels aufgeraut wird.

7. Wandbauelement zur Verwendung in einem Verfahren nach einem der vorhergehenden Ansprüche umfassend einen Wandbaustein mit einer Oberseite auf der Mörtel aufgebracht ist, **dadurch gekennzeichnet, dass** der Mörtel von einem Trockenmörtel enthaltend zumindest ein Bindemittel und wenigstens eine Gesteinskörnung sowie optional Zusatzstoffe und optional Zusatzmittel gebildet ist, und der Trockenmörtel ohne Reaktion von wenigstens 90 % des enthaltenen Bindemittels an der Oberseite des Wandbausteins fixiert ist.

8. Wandbauelement nach Anspruch 7, **dadurch gekennzeichnet, dass** die Fixierung des Trockenmörtels an der Oberseite des Wandbausteins dergestalt ausgebildet ist, dass der Trockenmörtel an dem Wandbaustein auch entgegen der Schwerkraft anhaftet.

9. Wandbauelement nach einem der Ansprüche 7 oder 8, **dadurch gekennzeichnet, dass** der Trockenmörtel mittels Kohäsion und Adhäsion durch Verpressen an der Oberseite des Wandbausteins anhaftet.

10. Wandbauelement nach einem der Ansprüche 7 bis 9, **dadurch gekennzeichnet, dass** der Trockenmörtel wenigstens eine wasserlösliche Fixierverbindung zur Fixierung des Trockenmörtels in sich und an der Oberseite des Wandbausteins enthält.

11. Wandbauelement nach einem der Ansprüche 7 bis 10, **dadurch gekennzeichnet, dass** die Fixierverbindung von Polyvinylpyrrolidon, Alkohol, Methylcelluloseether und/ oder Stärkeether gebildet ist.

12. Wandbauelement nach einem der Ansprüche 7 bis 11, **dadurch gekennzeichnet, dass** die Oberseite des Wandbausteins eine haftvermittelnde Grundierung aufweist

13. Wandbauelement nach Anspruch 12, **dadurch gekennzeichnet, dass** zwischen Grundierung und Trockenmörtel, jeweils in diese eindringend Quarzsand in einem Anteil positioniert ist, der höher ist als in dem übrigen Trockenmörtel.

14. Wandbauelement nach einem der Ansprüche 7 bis 13, **dadurch gekennzeichnet, dass** die Korngröße der Gesteinskörnung 0,1 bis 2 mm beträgt.

15. Wandbauelement nach einem der Ansprüche 7 bis 14, **dadurch gekennzeichnet, dass** der Trockenmörtel auf der Oberseite des Wandbausteins eine Waben-, Linien- oder Noppenstruktur aufweist.
